# EUROPEAN PATENT SPECIFICATION

(11) **EP 4 588 972 B1**
(45) Date of publication and mention of the grant of the patent: **12.08.2026**
(21) Application number: 24153081.5
(22) Date of filing: 22.01.2024
(51) Int. Cl.: C08L 23/14, C08F 2/00, C08F 210/06

(54) **HETEROPHASIC PROPYLENE COMPOSITIONS WITH IMPROVED STIFFNESS AND IMPACT**
HETEROPHASISCHE PROPYLENZUSAMMENSETZUNGEN MIT VERBESSERTER STEIFIGKEIT UND STOSSFESTIGKEIT
COMPOSITIONS DE PROPYLÈNE HÉTÉROPHASIQUE PRÉSENTANT UNE RIGIDITÉ ET UN IMPACT AMÉLIORÉS

(43) Date of publication of application: 23.07.2025
(73) Proprietor: Borealis GmbH, 1020 Vienna (AT)
(72) Inventor: WANG, Jingbo, 4021 Linz (AT); GAHLEITNER, Markus, 4021 Linz (AT); LESKINEN, Pauli, 06101 Porvoo (FI)
(74) Representative: Maiwald GmbH

(56) References cited:
- EP-A1- 2 143 760
- WO-A1-2021/209326
- WO-A1-98/59002

## Description

### Field of Invention

The present invention pertains to a heterophasic polypropylene composition (terHECO) comprising a matrix phase of a propylene/ethylene/1-butene terpolymer and a dispersed phase of propylene-ethylene elastomer. The present invention further pertains to a process for obtaining such heterophasic polypropylene composition (terHECO) and an article comprising such heterophasic polypropylene composition (terHECO).

### Background of Invention

Various types of polypropylene materials are used for various applications in packaging industry. Based on the end application, these polymers are required to possess different properties, such as stiffness, toughness, and optical properties. It is quite often that these properties have contradicting results, that is, when one is improved the other may be deteriorated. Heterophasic polypropylene compositions have been a successful candidate in packaging industry to maintain the mentioned balance of different properties required due to the presence of different phases contributing to different properties.

EP 2 143 760 A1 describes a heterophasic polypropylene composition which is useful for the preparation of sterilizable containers such as retort pouches or medical packaging. The heterophasic polypropylene composition comprises a propylene copolymer matrix comprising comonomer units derived from ethylene and from a C₄-C₁₂-alpha-olefin, and an elastomeric ethylene/propylene/C₄-C₁₂-alpha-olefin copolymer, which is dispersed within the matrix, the heterophasic polypropylene composition having a xylene cold soluble fraction of at least 10 wt%, and the xylene cold soluble fraction having an amount of propylene-derived monomer units of at least 60 wt%.

EP 0 472 946 A2 discloses a polyolefin composition comprising a fraction of homopolymer of propylene, a fraction of copolymer of ethylene, and a fraction of copolymer of ethylene/propylene/CH2=CHR α-olefin. Although it aims to balance the properties, it focuses on working on highly flexible elastoplastic polyolefin compositions.

Therefore, the need for having polypropylene compositions to be used in packaging industry with a balance of properties still exists. The present invention provides a heterophasic polypropylene composition (terHECO) with improved stiffness, impact and sealing properties.

### Summary of Invention

The present invention relates to a heterophasic polypropylene composition (terHECO) comprising a matrix phase of a propylene/ethylene/1-butene terpolymer and a dispersed phase of propylene-ethylene elastomer, wherein the heterophasic polypropylene composition (terHECO) has
- a melt flow rate MFR₂, as determined in accordance with ISO1133 at 230 °C under 2.16 kg, of from 0.1 to 10.0 g/10 min;
- an ethylene content, as determined by quantitative ¹³C-NMR spectroscopic analysis, of from 5.0 to 25.0 wt.-%;
- a melting temperature Tm, as determined in accordance with ISO 11357/part 3/method C2, of from 125 to 145 °C;
- a xylene cold soluble (XCS) fraction, as determined in accordance with ISO 16152 at 25 °C, of from 10 to 55 wt.-%;
- an ethylene content of the xylene cold soluble (XCS) fraction (C2(XCS)), as determined by quantitative ¹³C-NMR spectroscopic analysis, of from 35 to 80 wt.-%;
- an intrinsic viscosity of the xylene cold soluble (XCS) fraction (iV(XCS)), as determined in accordance with ISO 1628-1&3, of from 0.5 to 5.0 dl/g.

The present invention further pertains to a process for obtaining the heterophasic polypropylene composition (terHECO) as described herein through a multi-stage polymerization process comprising the steps of:
a) polymerizing propylene, ethylene and 1-butene in a first polymerization reactor, in the presence of a Ziegler-Natta catalyst and obtaining a first reaction fraction;
b) transferring the first reaction fraction to a second polymerization reactor;
c) polymerizing propylene, ethylene and 1-butene in the second polymerization reactor in the presence of the Ziegler-Natta catalyst and the first reaction fraction and obtaining a second reaction fraction;
d) transferring the second reaction fraction to a third polymerization reactor;
e) preparing propylene-ethylene elastomer in the presence of the Ziegler-Natta catalyst and the second reaction fraction, to obtain the heterophasic polypropylene composition (terHECO);
wherein the step a) is optionally preceded by a pre-polymerization step.

The present invention further relates to an article, preferably a film, more preferably a blown film, comprising the heterophasic polypropylene composition (terHECO) as described herein, preferably in an amount of from 80 to 100 wt.-%, more preferably from 90 to 100 wt.- %, based on the total weight of the article.

### Detailed Description

The term "heterophasic polypropylene composition" as used herein refers to polymer compositions having at least two distinct phases; a matrix and a dispersed phase. The matrix phase may comprise a propylene homopolymer (HECO), a propylene random copolymer (RAHECO) or a propylene terpolymer (terHECO), while the dispersed phase may be a propylene ethylene elastomer.

### Heterophasic polypropylene composition (terHECO)

The present invention relates to a heterophasic polypropylene composition (terHECO) comprising a matrix phase of a propylene/ethylene/1-butene terpolymer and a dispersed phase of propylene-ethylene elastomer.

The heterophasic polypropylene composition (terHECO) has a melt flow rate MFR₂, as determined in accordance with ISO1133 at 230 °C under 2.16 kg, of from 0.1 to 10.0 g/10 min, preferably from 0.2 to 5.0 g/10 min, and most preferably from 0.5 to 2.5 g/10 min.

The heterophasic polypropylene composition (terHECO) has an ethylene content, as determined by quantitative ¹³C-NMR spectroscopic analysis, of from 5.0 to 25.0 wt.-%, preferably from 10.0 to 20.0 wt.-%, more preferably from 12.0 to 18.0 wt.-%.

It is preferred when 1-butene content of the heterophasic polypropylene composition (terHECO) according to the present invention, as determined by quantitative ¹³C-NMR spectroscopic analysis, ranges from 0.5 to 20.0 wt.-%, more preferably from 1.0 to 15.0 wt.-%, and most preferably from 3.0 to 10.0 wt.-%.

The heterophasic polypropylene composition (terHECO) has a melting temperature Tm, as determined in accordance with ISO 11357/part 3/method C2, of from 125 to 145 °C, preferably from 128 to 140 °C, and most preferably from 130 to 138 °C.

The xylene cold soluble (XCS) fraction of the heterophasic polypropylene composition (terHECO), as determined in accordance with ISO 16152 at 25 °C, ranges from 10 to 55 wt.- %, preferably from 15 to 50 wt.-%, more preferably from 25 to 40 wt.-%.

The xylene cold soluble (XCS) fraction of the heterophasic polypropylene composition (terHECO) has an ethylene content (C2(XCS)), as determined by quantitative ¹³C-NMR spectroscopic analysis, of from 35 to 80 wt.-%.

The xylene cold soluble (XCS) fraction of the heterophasic polypropylene composition (terHECO) has an intrinsic viscosity (iV(XCS)), as determined in accordance with ISO 1628-1&3, of from 0.5 to 5.0 dl/g.

It is preferred when the heterophasic polypropylene composition (terHECO) of the present invention has:
**a)** an ethylene content of the xylene cold soluble (XCS) fraction (C2(XCS)), as determined by quantitative ¹³C-NMR spectroscopic analysis, of from 38 to 70 wt.-%, more preferably from 40 to 60 wt.-%; and/or
**b)** an intrinsic viscosity of the xylene cold soluble (XCS) fraction (iV(XCS)), as determined in accordance with ISO 1628-1&3, of from 1.0 to 4.5 dl/g, more preferably from 2.5 to 4.0 dl/g.

It is the most preferred when the heterophasic polypropylene composition (terHECO) of the present invention has an ethylene content of the xylene cold soluble (XCS) fraction (C2(XCS)), as determined by quantitative ¹³C-NMR spectroscopic analysis, of from 40 to 60 wt.-% and an intrinsic viscosity of the xylene cold soluble (XCS) fraction (iV(XCS)), as determined in accordance with ISO 1628-1&3, of from 2.5 to 4.0 dl/g.

The heterophasic polypropylene composition (terHECO) according to the present invention can be characterized by an improved impact strength. It is therefore preferred when the heterophasic polypropylene composition (terHECO) has:
**a)** a Charpy notched impact strength (NIS), as determined in accordance with ISO 179 1eA at +23 °C, of from 30 to 200 kJ/m², more preferably from 40 to 150 kJ/m², and most preferably from 50 to 100 kJ/m²; and/or
**b)** a Charpy notched impact strength (NIS), as determined in accordance with ISO 179 1eA at -20 °C, of from 1 to 20 kJ/m², more preferably from 2 to 15 kJ/m², and most preferably from 5 to 10 kJ/m².

It is the most preferred when the heterophasic polypropylene composition (terHECO) according to the present invention has a Charpy notched impact strength (NIS), as determined in accordance with ISO 179 1eA at +23 °C, of from 50 to 100 kJ/m² and a Charpy notched impact strength (NIS), as determined in accordance with ISO 179 1eA at -20 °C, of from 5 to 10 kJ/m².

The heterophasic polypropylene composition (terHECO) according to the present invention can further be characterized by high stiffness evidenced by high values of flexural modulus. It is therefore preferred when the heterophasic polypropylene composition (terHECO) has a flexural modulus, as determined in accordance with ISO 178, of from 100 to 1000 MPa, more preferably from 200 to 800 MPa, and most preferably from 300 to 600 MPa.

Preferably, the weight ratio between the matrix and the dispersed phase of the heterophasic polypropylene composition (terHECO) ranges from 60:40 to 90:10, more preferably from 65:35 to 85:15, and most preferably from 70:30 to 80:20.

The heterophasic polypropylene composition (terHECO) according to the present invention may further comprise additives, such as fillers, lubricants, processing aids, antioxidants, UV absorbers, light stabilizers, nucleating agents, foaming or blowing agents, clarifiers and pigments, preferably in an amount from 0.1 to 10 wt.-%, and more preferably from 0.2 to 2.0 wt.-%, based on the total weight of the heterophasic polypropylene composition (terHECO).

### Process

The present invention further relates to a process for obtaining the heterophasic polypropylene composition (terHECO) as described herein through a multi-stage polymerization process comprising the steps of:
**a)** polymerizing propylene, ethylene and 1-butene in a first polymerization reactor, in the presence of a Ziegler-Natta catalyst and obtaining a first reaction fraction;
**b)** transferring the first reaction fraction to a second polymerization reactor;
**c)** polymerizing propylene, ethylene and 1-butene in the second polymerization reactor in the presence of the Ziegler-Natta catalyst and the first reaction fraction and obtaining a second reaction fraction;
**d)** transferring the second reaction fraction to a third polymerization reactor;
**e)** preparing propylene-ethylene elastomer in the presence of the Ziegler-Natta catalyst and the second reaction fraction, to obtain the heterophasic polypropylene composition (terHECO).

It is preferred when the process as described hereinabove starts with a prepolymerization prior to step a).

Generally, polymers produced in a multi-stage process are also designated as "in-situ" blends. The resulting end product consists of an intimate mixture of the polymers from the three or more reactors. These three or more polymers may have different molecular weight distribution curves, and/or they may differ in terms of comonomer content or type. The end product thus contains a mixture of three or more polymers with differing properties, i.e., it is a multimodal polymer mixture.

The polymerization of step a) for producing the first reaction fraction is preferably a slurry polymerization step. The slurry polymerization usually takes place in a liquid mixture of the employed monomers, preferably without the presence of an inert diluent, like a hydrocarbon diluent.

The temperature in step a) is typically from 60 to 100 °C, preferably from 60 to 80 °C. An excessively high temperature should be avoided to prevent partial dissolution of the polymer into the liquid phase, the fouling of the reactor and early deactivation of the catalyst. The pressure is typically from 1 to 150 bar, preferably from 40 to 80 bar.

The slurry polymerization may be conducted in any known reactor used for slurry polymerization, such as any bulk phase reactor. Such reactors include a continuous stirred tank reactor and a loop reactor. It is especially preferred to conduct the polymerization of step a) in a loop reactor. In such reactors the slurry is circulated with a high velocity along a closed pipe by using a circulation pump. Loop reactors are generally known in the art and examples are given, for instance, in the patent applications US-A-4582816, US-A-3405109, US-A-3324093, EP-A-479186 and US-A-5391654. It is thus preferred to conduct the step a) as a slurry polymerization in a loop reactor.

The slurry may be withdrawn from the reactor either continuously or intermittently. A preferred way of intermittent withdrawal is the use of settling legs where the slurry is allowed to concentrate before withdrawing a batch of the concentrated slurry from the reactor. The use of settling legs is disclosed, among others, in US-A-3374211, US-A-3242150 and EP-A-1310295. Continuous withdrawal is disclosed, among others, in EP-A-891990, EP-A-1415999, EP-A-1591460 and WO-A-2007/025640. The continuous withdrawal is advantageously combined with a suitable concentration method, as disclosed in EP-A-1310295 and EP-A-1591460. It is preferred to withdraw the slurry from the first polymerization stage continuously.

Hydrogen is typically introduced into step a) for controlling the MFR₂ of the polymer. The amount of hydrogen needed to reach the desired MFR₂ depends on the catalyst used and the polymerization conditions, as will be appreciated by the skilled worker.

The average residence time in step a) is typically from 20 to 120 minutes, preferably from 30 to 80 minutes. As it is well known in the art the average residence time τ can be calculated from equation (1) below: $τ = \frac{{V}_{R}}{{Q}_{o}}$ wherein
*V_{R}* is the volume of the reaction space (in case of a loop reactor, the volume of the reactor, in case of the fluidized bed reactor, the volume of the fluidized bed),
*Qₒ* is the volumetric flow rate of the product stream (including the polymer product and the fluid reaction mixture).

The production rate is suitably controlled with the catalyst feed rate. It is also possible to influence the production rate by suitable selection of the monomer concentration. The desired monomer concentration can then be achieved by suitably adjusting the propylene feed rate.

The first reaction fraction is transferred to a second polymerization reactor for producing a second reaction fraction in a gas phase polymerization step as described in step b), i.e., carried out in a first gas-phase reactor (GPR1). Any suitable gas phase reactor known in the art may be used, such as a fluidized bed gas phase reactor.

For gas phase reactors, the reaction temperature used will generally be in the range 60 to 115 °C (e.g. 70 to 110 °C), the reactor pressure will generally be in the range 10 to 25 bar, and the residence time will generally be 1 to 8 hours. The gas used will commonly be a non-reactive gas such as nitrogen or low boiling point hydrocarbons such as propane together with monomer.

A chain transfer agent (e.g., hydrogen) is typically added to the second polymerization stage c).

In the first gas-phase reactor (GPR1), the second reaction fraction is formed as described in step c).

The second reaction fraction is then transferred to a third polymerization reactor as described in transfer step d), for producing the propylene-ethylene elastomer as described in step e) in a gas phase polymerization step, i.e., carried out in a second gas-phase reactor (GPR2). Any suitable gas phase reactor known in the art may be used, such as a fluidized bed gas phase reactor. The condition range described above for the first gas phase reactor are similarly used for the second gas phase reactor.

A preferred multistage process is the above-identified slurry-gas phase process, such as developed by Borealis and known as the Borstar^{®} technology. In this respect, reference is made to the European patent applications EP-A-0887379 and EP-A-0517868.

The process may comprise one or more further polymerization stage(s)/step(s). Particularly preferred is a prepolymerization step, which precedes the polymerization step a).

The purpose of the prepolymerization is to polymerize a small amount of polymer onto the catalyst at a low temperature and/or a low monomer concentration. By prepolymerization, it is possible to improve the performance of the catalyst in slurry and/or modify the properties of the final polymer. The prepolymerization step is typically conducted in slurry.

Thus, the prepolymerization step may be conducted in a loop reactor. The prepolymerization is again preferably conducted in liquid propylene, without the presence of an inert diluent, like a hydrocarbon diluent.

The temperature in the prepolymerization step is typically from 0 to 60 °C, preferably from 10 to 50 °C and more preferably from 15 to 40 °C.

The pressure is not critical and is typically from 1 to 150 bar, preferably from 40 to 80 bar.

The amount of monomer is typically such that from 0.1 to 1000 grams of monomer per one gram of solid catalyst component is polymerized in the prepolymerization step. As the person skilled in the art knows, the catalyst particles recovered from a continuous prepolymerization reactor do not all contain the same amount of prepolymer. Instead, each particle has its own characteristic amount which depends on the residence time of that particle in the prepolymerization reactor. As some particles remain in the reactor for a relatively long time and some for a relatively short time, then also the amount of prepolymer on different particles is different and some individual particles may contain an amount of prepolymer which is outside the above limits. However, the average amount of prepolymer on the catalyst typically is within the limits specified above.

The molecular weight of the prepolymer may be controlled by hydrogen as it is known in the art. Further, antistatic additives may be used to prevent the particles from adhering to each other or the walls of the reactor, as disclosed in WO-A-96/19503 and WO-A-96/32420.

The catalyst components are preferably all introduced to the prepolymerization step when a prepolymerization step is present. However, where the solid catalyst component and the cocatalyst can be fed separately it is possible that only a part of the cocatalyst is introduced into the prepolymerization stage and the remaining part into subsequent polymerization stages. In such cases it is necessary to introduce as much cocatalyst into the prepolymerization stage that a sufficient polymerization reaction is obtained therein.

It is understood within the scope of the invention, that the amount of polymer produced in the prepolymerization typically lies within 1.0 to 5.0 wt.-%, based on the total weight of the heterophasic polypropylene composition (terHECO) and is included in the split of the loop phase as presented in examples herein.

### Catalyst

The process for obtaining the heterophasic polypropylene composition (terHECO) as described hereinabove is preferably conducted using a Ziegler-Natta catalyst. It is further preferred when the Ziegler-Natta catalyst comprises:
- compound(s) of a transition metal of Group 4 to 6 of IUPAC;
- a Group 2 metal compound;
- an internal donor, wherein said internal donor is a non-phthalic compound, preferably is a non-phthalic acid ester;
- a co-catalyst; and
- optionally an external donor.

The internal donor is preferably selected from (di)esters of non-phthalic carboxylic (di)acids, 1,3-diethers, derivatives and mixtures thereof. Most preferred internal donors are (di)esters of citraconic acid.

Preferably, the Ziegler-Natta catalyst does not comprise phthalic acid esters, and the heterophasic polypropylene composition (terHECO) is free of phthalic acid esters and their respective decomposition products.

Suitable Ziegler-Natta catalysts for use in the above-described polymerization reactions and preparation thereof are described in EP-A-3562850.

### Article

The present invention further relates to an article, preferably a film, more preferably a blown film, comprising the heterophasic polypropylene composition (terHECO) according to the present invention. The article may preferably comprise the heterophasic polypropylene composition (terHECO) in an amount of from 80 to 100 wt.-%, more preferably from 90 to 100 wt.-%, based on the total weight of the article. It is the most preferred when the article consists of the heterophasic polypropylene composition (terHECO).

It is particularly preferred when the article is a film, more preferably a blown film, with a thickness of from 5 to 200 µm, more preferably from 10 to 150 µm, and most preferably from 20 to 100 µm.

When the article according to the present invention is a film, more preferably a blown film, it preferably has
**a)** a tensile modulus in machine direction (TM/MD), as determined on 50 µm blown film in accordance with ISO 527-3, of from 100 to 900 MPa, more preferably from 200 to 800 MPa, and most preferably from 250 to 600 MPa; and/or
**b)** a tensile modulus in transverse direction (TM/TD), as determined on 50 µm blown film in accordance with ISO 527-3, of from 100 to 900 MPa, more preferably from 200 to 800 MPa, and most preferably from 250 to 500 MPa.

It is more preferred when the article of the present invention is a film, more preferably a blown film, with a tensile modulus in machine direction (TM/MD), as determined on 50 µm blown film in accordance with ISO 527-3, of from 250 to 600 MPa and a tensile modulus in transverse direction (TM/TD), as determined on 50 µm blown film in accordance with ISO 527-3, of from 250 to 500 MPa.

It is further preferred when the article is a film, more preferably a blown film, having a low sealing initiation temperature (SIT), as determined on 50 µm blown film according to the method disclosed herein, of from 90 to 120 °C, more preferably from 95 to 115 °C, and most preferably from 100 to 110 °C. The low sealing initiation temperature (SIT) particularly makes the mentioned film suitable for packaging applications.

It is further preferred when the article is a film, more preferably a blown film, having a dart drop impact (DDI), as determined on 50 µm blown film in accordance with ISO 7765-1:1988/Method A, of from 500 to 1700 g, preferably from 600 to 1500 g, and most preferably from 800 to 1200 g.

### MEASUREMENT METHODS

### Melt Flow Rate

The melt flow rate (MFR) was determined according to ISO 1133 and is indicated in g/10 min. The MFR is an indication of the flowability, and hence the processability, of the polymer. The higher the melt flow rate, the lower the viscosity of the polymer. The MFR₂ of polypropylene was determined at a temperature of 230 °C and a load of 2.16 kg.

Calculation of melt flow rate MFR₂ (230 °C) of the polymer fraction produced in the second polymerization reactor is carried out using the formula below: $MFR \left(B\right) = {10}^{\left[\frac{log \left(MFR\left(C\right)\right) - w \left(A\right) xlog \left(MFR\left(A\right)\right)}{w \left(B\right)}\right]}$ wherein
w(A) is the weight fraction in [wt.-%] and MFR(A) is melt flow rate MFR₂ (230 °C) in [g/10 min] of the first polymer fraction (A) obtained in the first polymerization reactor,
w(B) is the weight fraction in [wt.-%] and MFR(B) is melt flow rate MFR₂ (230 °C) in [g/10 min] of second polymer fraction (B) obtained in the second polymerization reactor,
MFR(C) is melt flow rate MFR₂ (230 °C) in [g/10 min] of the polymer obtained as a result of the second polymerization step (the final polymer, which comprises both fractions (A) and (B)).

### Comonomer Content

Quantitative nuclear-magnetic resonance (NMR) spectroscopy was used to quantify the comonomer content of the polymers.

### • RAHECO

Quantitative ¹³C{¹H} NMR spectra were recorded in the solution-state using a Bruker Advance III 400 NMR spectrometer operating at 400.15 and 100.62 MHz for ¹H and ¹³C respectively. All spectra were recorded using a ¹³C optimised 10 mm extended temperature probe head at 125°C using nitrogen gas for all pneumatics.

Approximately 200 mg of material was dissolved in *1,2*-tetrachloroethane-*d*₂ (TCE-*d*₂). To ensure a homogenous solution, after initial sample preparation in a heat block, the NMR tube was further heated in a rotatary oven for at least 1 hour. Upon insertion into the magnet the tube was spun at 10 Hz.

Standard single-pulse excitation was employed utilising the NOE and bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 8192 (8k) transients were acquired per spectra.

Quantitative ¹³C{¹H} NMR spectra were processed, integrated and relevant quantitative properties determined from the integrals using proprietary computer programs.

The comonomer fraction was quantified using the method of Wang et. al. (Wang, W-J., Zhu, S., Macromolecules 33 (2000), 1157) through integration of multiple signals across the whole spectral region in the ¹³C{¹H} spectra. This method was chosen for its robust nature and ability to account for the presence of regio-defects when needed. Integral regions were slightly adjusted to increase applicability across the whole range of encountered comonomer contents.

For systems where only isolated ethylene in PPEPP sequences was observed the method of Wang et. al. was modified to reduce the influence of non-zero integrals of sites that are known to not be present. This approach reduced the overestimation of ethylene content for such systems and was achieved by reduction of the number of sites used to determine the absolute ethylene content to: $E = 0.5 \left({S}_{ββ}+{S}_{βγ}+{S}_{βδ}+0.5\left({S}_{αβ}+{S}_{αγ}\right)\right)$

Through the use of this set of sites the corresponding integral equation becomes: $E = 0.5 \left({I}_{H}+{I}_{G}+0.5\left({I}_{C}+{I}_{D}\right)\right)$ using the same notation used in the article of Wang et. al. (Wang, W-J., Zhu, S., Macromolecules 33 (2000), 1157). Equations used for absolute propylene content were not modified.

The mole percent comonomer incorporation was calculated from the mole fraction: $E \left[mol-%\right] = 100 * {f}_{E}$

The weight percent comonomer incorporation was calculated from the mole fraction: $E \left[wt.-%\right] = 100 * \left({f}_{E}*28.06\right) / \left(\left({f}_{E}*28.06\right)+\left(\left(1-{f}_{E}\right)*42.08\right)\right)$

### • terHECO

Quantitative ¹³C{¹H} NMR spectra were recorded in the molten-state using a Bruker Avance III 500 NMR spectrometer operating at 500.13 and 125.76 MHz for ¹H and ¹³C respectively. All spectra were recorded using a ¹³C optimised 7 mm magic-angle spinning (MAS) probehead at 180°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification {klimke06, parkinson07, castignolles09}. Standard single-pulse excitation was employed utilising the NOE at short recycle delays of 3s {pollard04, klimke06} and the RS-HEPT decoupling scheme {fillip05,griffin07}. A total of 1024 (1k) transients were acquired per spectra.

Quantitative ¹³C{¹H} NMR spectra were processed, integrated and relevant quantitative properties determined from the integrals. All chemical shifts are internally referenced to the methyl isotactic pentad (*mmmm*) at 21.85 ppm and assignments done according {brandolini01, randall89, resconi00}.

Characteristic signals corresponding to the incorporation of 1-butene were observed and the comonomer content quantified in the following way. The amount isolated 1-butene incorporated in PBP sequences was quantified using the integral of the αB2 sites at 43.6 ppm accounting for the number of reporting sites per comonomer: $B = {I}_{αB 2} / 2$

If observed the amount consecutively incorporated 1-butene in PBBP sequences was quantified using the integral of the ααB2 site at 40.6 ppm accounting for the number of reporting sites per comonomer: $BB = 2 * {I}_{ααB 2}$

In case of presence of consecutively incorporated 1-butene (BB) the isolated incorporated butene (B) needs to be corrected due to influencing signals by subtracting BB/2.

Characteristic signals corresponding to different incorporations of ethylene were observed and the comonomer content quantified utilising following assignments and equations for the respective sequences:

| chemical shift [ppm] | assignment |
|---|---|
| 47.9 - 45.1 | Sαα |
| 30.1 | Sγδ |
| 29.7 | Sδδ |
| 27.7 - 26.5 | Sβδ |
| 25.1 - 23.9 | Sββ |

| sequence | signal / equation |
|---|---|
| E | I_{Sββ} |
| EE | I_{Sβδ} |
| EEE | I_{(Sδδ/2) + (Sγδ/4)} |

The amount of P was quantified based on the Sαα methylene site including additional propene units not covered by Sαα: $P = {I}_{Sαα} + B + \left(0.5*BB\right) + E + \left(0.5*EE\right)$

The total amount of comonomers was then calculated as follows: ${B}_{total} = B + BB {E}_{total} = E + EE + EEE {P}_{total} = P$ $B \left[mol%\right] = 100 * {B}_{total} / \left({B}_{total}+{E}_{total}+{P}_{total}\right)$ $E \left[mol%\right] = 100 * {E}_{total} / \left({B}_{total}+{E}_{total}+{P}_{total}\right)$ $P \left[mol%\right] = 100 * {P}_{total} / \left({B}_{total}+{E}_{total}+{P}_{total}\right)$

The weight percent comonomer incorporation was calculated from the mol%: $B \left[wt%\right] = 100 * \left(B\left[mol%\right]*56.11\right) / \left(\left(E\left[mol%\right]*28.05\right)+\left(B\left[mol%\right]*56.11\right)+\left(P\left[mol%\right]*42.08\right)\right)$ $E \left[wt%\right] = 100 * \left(E\left[mol%\right]*28.05\right) / \left(\left(E\left[mol%\right]*28.05\right)+\left(B\left[mol%\right]*56.11\right)+\left(P\left[mol%\right]*42.08\right)\right)$

For e.g. xylene soluble fraction where butene was not observed the related equations collapse to the following: $P = {I}_{Sαα} + E + \left(0.5*EE\right)$

The total amount of comonomer was then calculated as follows: ${E}_{total} = E + EE + EEE {P}_{total} = P$ $E \left[mol%\right] = 100 * {E}_{total} / \left({E}_{total}+{P}_{total}\right)$ $P \left[mol%\right] = 100 * {P}_{total} / \left({E}_{total}+{P}_{total}\right)$

The weight percent comonomer incorporation was calculated from the mol%: $E \left[wt%\right] = 100 * \left(E\left[mol%\right]*28.05\right) / \left(\left(E\left[mol%\right]*28.05\right)+\left(P\left[mol%\right]*42.08\right)\right)$

### References

klimke06: Klimke, K., Parkinson, M., Piel, C., Kaminsky, W., Spiess, H.W., Wilhelm, M., Macromol. Chem. Phys. 2006;207:382.
parkinson07: Parkinson, M., Klimke, K., Spiess, H.W., Wilhelm, M., Macromol. Chem. Phys. 2007;208:2128.
pollard04: Pollard, M., Klimke, K., Graf, R., Spiess, H.W., Wilhelm, M., Sperber, O., Piel, C., Kaminsky, W., Macromolecules 2004;37:813.
filip05: Filip, X., Tripon, C., Filip, C., J. Mag. Resn. 2005, 176, 239
griffin07: Griffin, J.M., Tripon, C., Samoson, A., Filip, C., and Brown, S.P., Mag. Res. in Chem. 2007 45, S1, S198
castignolles09: Castignolles, P., Graf, R., Parkinson, M., Wilhelm, M., Gaborieau, M., Polymer 50 (2009) 2373
resconi00: Resconi, L., Cavallo, L., Fait, A., Piemontesi, F., Chem. Rev. 2000, 100, 1253
randall89: J. Randall, Macromol. Sci., Rev. Macromol. Chem. Phys. 1989, C29, 201.
brandolini01: A.J. Brandolini, D.D. Hills, "NMR spectra of polymers and polymer additives", Marcel Deker Inc., 2000
abis86: L. Abis, Mackromol. Chem. 187, 1877-1886 (1986)

### Xylene Cold Soluble Fraction (XCS)

The xylene cold soluble fraction (XCS) was determined according to ISO 16152 at 25 °C.

### Intrinsic viscosity (IV)

The intrinsic viscosity of the xylene cold solubles (IV/XCS) was measured at 135 °C in decalin according to ISO 1628-1 & 3.

### Differential scanning calorimetry (DSC)

Differential scanning calorimetry (DSC) analysis was used to measure the melting temperature (Tₘ), using a TA Instrument Q200 differential scanning calorimetry (DSC) on 5 to 7 mg samples. DSC was run according to ISO 11357 / part 3 /method C2 in a heat/cool/heat cycle with a scan rate of 10 °C/min in the temperature range of -30 to +225 °C. Melting temperature (Tₘ) was determined from the second heating step.

Throughout the present description, the term Tₘ is understood as peak temperature of melting as determined by DSC at a heating rate of 10 K/min.

### Notched Impact Strength (NIS)

The Charpy notched impact strength (NIS) was measured according to ISO 179 1eA at +23 °C and at -20 °C, respectively, using injection molded bar test specimens of 80x10x4 mm³ prepared in accordance with ISO 1873-2.

### Flexural Modulus (FM)

The flexural modulus was determined in a 3-point-bending test at 23 °C according to ISO 178 on 80x10x4 mm³ test bars injection molded in line with ISO 1873-2.

### Tensile modulus (TM)

The tensile modulus of the films (TM) in machine direction (MD) and transverse direction (TD) was determined according to ISO 527-3 on blown films with a thickness of 50 µm.

### Seal initiation temperature (SIT)

The following method was used to determine the sealing window (sealing temperature range) of the films. The determined results give the user a quantitatively useful indication of the strength of the sealed films and show the temperature range for optimal sealing.

The lower limit (Sealing Initiation Temperature - SIT) is the sealing temperature at which a sealing force of 5 N is achieved. The upper limit (Sealing End Temperature - SET) is identified, before the film burns through.

The temperature interval was set by default to 5 °C, but can be reduced to 1 °C when the curve shows a sharp increase or decrease in the force values between two temperature steps in order to represent a better curve profile. Deviating from ASTM F1921 - 12, the test parameters sealing pressure, sealing time, delay time and clamp separation rate were modified. The determination of the force/temperature curve was continued until thermal failure of the film. In addition to failure mode evaluations described in the standard, additional failure modes were used.

Standard conditions:
Conditioning time: > 96 h
Sealing jaws dimension: 50x5 mm
Sealing jaws shape: flat
Sealing jaws coating: Niptef
Sealing temperature: ambient -240°C
Sealing temperature interval: 5 °C
Sealing time: 1 sec
Delay time: 30 sec
Sealing pressure: 0.4 N/mm² (PE); 0.67 N/mm² (PP)7.4
Clamp separation rate: 42 mm/sec
Sample width: 25 mm

The measurements were conducted on blown films with a thickness of 50 µm.

### Dart drop impact (DDI)

The dart drop impact (DDI) of the films was determined according to ISO 7765-1:1988 / Method

A on blown films with a thickness of 50 µm.

Standard conditions:
Conditioning time: >96 h
Test temperature: 23 °C
Dart head material: phenolic
Dart diameter: 38 mm
Drop height: 660 mm

### EXAMPLES

### Polymer compositions

Random heterophasic polypropylene composition RAHECO, heterophasic polypropylene compositions terHECO1 and terHECO2 were all produced in a multi-stage polymerization process with prepolymerization - loop - GPR1 - GPR2 setup, using a Ziegler-Natta catalyst prepared as described in EP-A-3562850. The solid catalyst component was used along with triethylaluminium (TEAL) as co-catalyst and dicyclo-pentyl-dimethoxy-silane (D-donor) as external donor.

All polymerization details are presented in Table 1 below.

**Table 1. Polymerization details for RAHECO, terHECO1 and terHECO2**

| | | **RAHECO** | **terHECO1** | **terHECO2** |
|---|---|---|---|---|
| **Prepoly** | | | | |
| **[Co]/[ED]** | **[mol/mol]** | 10 | 10 | 10 |
| **[Co]/[Ti]** | **[mol/mol]** | 220 | 220 | 220 |
| **Temperature** | **[°C]** | 25 | 22 | 20 |
| **Residence time** | **[min]** | 15 | 18 | 24 |

| **Loop** | | | | |
|---|---|---|---|---|
| **Temperature** | **[°C]** | 75 | 65 | 65 |
| **Split** | **[wt.-%]** | 46 | 34 | 41 |
| **H2/C3** | **[mol/kmol]** | 0.28 | 0.32 | 0.29 |
| **C2/C3** | **[mol/kmol]** | 4.6 | 8.8 | 8.5 |
| **C4/C3** | **[mol/kmol]** | - | 181.8 | 187.9 |
| **MFR₂** | **[g/10 min]** | 0.7 | 1.8 | 1.8 |
| **C2** | **[wt.-%]** | 2.5 | 1.0 | 1.1 |
| **C4** | **[wt.-%]** | - | 6.2 | 6.2 |

| **GPR1** | | | | |
|---|---|---|---|---|
| **Temperature** | **[°C]** | 80 | 75 | 80 |
| **Split** | **[wt.-%]** | 36 | 39 | 43 |
| **H2/C3** | **[mol/kmol]** | 3.8 | 9.6 | 7.1 |
| **C2/C3** | **[mol/kmol]** | 31.2 | 19.0 | 17.3 |
| **C4/C3** | **[mol/kmol]** | - | 188.6 | 197 |
| **MFR₂** | **[g/10 min]** | 0.7 | 1.4 | 1.6 |
| **XCS** | **[wt.-%]** | 7.4 | 7.4 | 8.0 |
| **C2** | **[wt.-%]** | 4.0 | 1.4 | 1.3 |
| **C4** | **[wt.-%]** | - | 8.0 | 7.9 |

| **GPR2** | | | | |
|---|---|---|---|---|
| **Temperature** | **[°C]** | 75 | 70 | 70 |
| **Split** | **[wt.-%]** | 18 | 27 | 16 |
| **H2/C2** | **[mol/kmol]** | 385 | 163 | 384 |
| **C2/C3** | **[mol/kmol]** | 522 | 1613 | 416 |
| **C4/C3** | **[mol/kmol]** | - | 0 | 0 |
| **MFR₂** | **[g/10 min]** | 0.5 | 0.9 | 1.8 |

| **Final properties of powder** | | | | |
|---|---|---|---|---|
| **MFR₂** | **[g/10 min]** | **-** | 0.9 | 1.8 |
| **C2** | **[wt.-%]** | - | 15.5 | 4.9 |
| **C4** | **[wt.-%]** | - | 5.0 | 5.0 |
| **Total comonomer** | **[wt.-%]** | - | 20.0 | 9.9 |
| **XCS** | **[wt.-%]** | - | 29.9 | 23.4 |
| **C2(XCS)** | **[wt.-%]** | - | 49.8 | 36.8 |
| **Tm** | **[°C]** | - | 134 | 133 |
| **IV (XCS)** | **[dl/g]** | - | 3.45 | 2.02 |

| | | | | |
|---|---|---|---|---|
| RAHECO, terHECO1 and terHECO2 were compounded in a co-rotating twin-screw extruder Coperion ZSK 47 at 220 °C with 0.19 wt.-% of an antioxidant blend (available as Irganox B215FF from BASF AG, Germany; this is a 1:2-mixture of Pentaerythrityl-tetrakis(3-(3',5'-di-tert. butyl-4-hydroxyphenyl)-propionate, CAS-no. 6683-19-8, and Tris (2,4-di-t-butylphenyl) phosphite, CAS-no. 31570-04-4); 0.05 wt.-% of Ca-stearate (available from Faci, Italy; CAS-no.1592-23-0), based on the total weight of RAHECO, terHECO1 and terHECO2 individually. They form CE1, IE1 and CE2, respectively. TerHECO1 and terHECO2 were visbroken using 360 ppm of Trigonox 101 (Nouryon) with same additive and compounding condition as above. As a result, IE2 and CE3 were obtained. | | | | |

Table 2 below presents the properties of the polymer compositions mentioned hereinabove.

**Table 2. Properties of the polymer compositions**

| | | **CE1** | **CE2** | **CE3*** | **IE1** | **IE2*** |
|---|---|---|---|---|---|---|
| **Base polymer** | - | **RAHECO** | **terHECO2** | **terHECO2** | **terHECO1** | **terHECO1** |
| **MFR₂** | **[g/10min]** | 0.8 | 1.6 | 10 | 0.9 | 6 |
| **VR**** | **-** | - | - | 6.5 | - | 6.7 |
| **XCS** | **[wt.-%]** | 22 | 23.4 | 25.1 | 29.9 | 34.11 |
| **Tm** | **[°C]** | 141 | 133 | 134 | 134 | 135 |
| **NIS (at 23 °C)** | **[kJ/m²]** | 57.7 | 71.4 | 21.3 | 87.1 | 71.3 |
| **NIS (at -20 °C)** | **[kJ/m²]** | 2 | 1.8 | 1.7 | 7.9 | 7.1 |
| **FM** | **[MPa]** | 647 | 465 | 445 | 408 | 353 |

| | | | | | | |
|---|---|---|---|---|---|---|
| * *CE3 is visbroken version of CE2, while IE2 is visbroken version of IE1* *** VR is the visbreaking ratio calculated by dividing the final MFR2 with the initial MFR2* | | | | | | |

It is evident from Table 2 that IE1 showed an excellent toughness represented by high impact resistance at both 23 and -20 °C. Looking at the flexural modulus, one can conclude that the stiffness of IE1 was comparable.

After IE1 and CE2 were visbroken to obtain IE2 and CE3, respectively, it was observed that impact properties of IE1 were mainly preserved. It is the usual observation that once the heterophasic propylene copolymers are visbroken, the impact properties are severely affected. However, as can be clearly seen once IE2 and CE3 are compared, this was not the case for the present invention.

### Blown films

Blown films were produced in Collin 30 BF line according to standard procedures, with the blow-up ratio (BUR) of 1:2.5, melt temperature of 215 °C, uptake speed of 6.2 m/min and final film thickness of 50 µm.

Table 3 below shows the final film properties.

**Table 3. Film properties**

| | | **CE1** | **CE2** | **IE1** |
|---|---|---|---|---|
| TM/MD | [MPa] | 572 | 408 | 358 |
| TM/TD | [MPa] | 547 | 395 | 325 |
| SIT | [°C] | 117 | 105 | 106 |
| DDI | [g] | 719 | 458 | 930 |

Table 3 confirms that blown film made of IE1 exhibited a comparable tensile modulus in both machine and transverse directions and sealing initiation temperature. Dart drop impact, on the other hand, was significantly higher for the film made of IE1 compared to the ones made of CE1 and CE2.

## Claims

1. A heterophasic polypropylene composition (terHECO) comprising a matrix phase of a propylene/ethylene/1-butene terpolymer and a dispersed phase of propylene-ethylene elastomer, wherein the heterophasic polypropylene composition (terHECO) has
- a melt flow rate MFR₂, as determined in accordance with ISO1133 at 230 °C under 2.16 kg, of from 0.1 to 10.0 g/10 min;
- an ethylene content, as determined by quantitative ¹³C-NMR spectroscopic analysis as detailed in the description, of from 5.0 to 25.0 wt.-%;
- a melting temperature Tm, as determined in accordance with ISO 11357/part 3/method C2, of from 125 to 145 °C;
- a xylene cold soluble (XCS) fraction, as determined in accordance with ISO 16152 at 25 °C, of from 10 to 55 wt.-%;
- an ethylene content of the xylene cold soluble (XCS) fraction (C2(XCS)), as determined by quantitative ¹³C-NMR spectroscopic analysis as detailed in the description, of from 35 to 80 wt.-%;
- an intrinsic viscosity of the xylene cold soluble (XCS) fraction (iV(XCS)), as determined in accordance with ISO 1628-1&3, of from 0.5 to 5.0 dl/g.

2. The heterophasic polypropylene composition (terHECO) according to claim 1, having an ethylene content, as determined by quantitative ¹³C-NMR spectroscopic analysis as detailed in the description, of from 10.0 to 20.0 wt.-%, preferably from 12.0 to 18.0 wt.-%.

3. The heterophasic polypropylene composition (terHECO) according to any of the preceding claims, having a 1-butene content, as determined by quantitative ¹³C-NMR spectroscopic analysis as detailed in the description, of from 0.5 to 20.0 wt.-%, preferably from 1.0 to 15.0 wt.-%, and most preferably from 3.0 to 10.0 wt.-%.

4. The heterophasic polypropylene composition (terHECO) according to any of the preceding claims, having a xylene cold soluble (XCS) fraction, as determined in accordance with ISO 16152 at 25 °C, of from 15 to 50 wt.-%, preferably from 25 to 40 wt.-%.

5. The heterophasic polypropylene composition (terHECO) according to any of the preceding claims, having:
a) an ethylene content of the xylene cold soluble (XCS) fraction (C2(XCS)), as determined by quantitative ¹³C-NMR spectroscopic analysis as detailed in the description, of from 38 to 70 wt.-%, preferably from 40 to 60 wt.-%; and/or
b) an intrinsic viscosity of the xylene cold soluble (XCS) fraction (iV(XCS)), as determined in accordance with ISO 1628-1&3, of from 1.0 to 4.5 dl/g, preferably from 2.5 to 4.0 dl/g.

6. The heterophasic polypropylene composition (terHECO) according to any of the preceding claims, having:
a) a Charpy notched impact strength (NIS), as determined in accordance with ISO 179 1eA at +23 °C, of from 30 to 200 kJ/m², preferably from 40 to 150 kJ/m², and most preferably from 50 to 100 kJ/m²; and/or
b) a Charpy notched impact strength (NIS), as determined in accordance with ISO 179 1eA at -20 °C, of from 1 to 20 kJ/m², preferably from 2 to 15 kJ/m², and most preferably from 5 to 10 kJ/m².

7. The heterophasic polypropylene composition (terHECO) according to any of the preceding claims, having a flexural modulus, as determined in accordance with ISO 178, of from 100 to 1000 MPa, preferably from 200 to 800 MPa, and most preferably from 300 to 600 MPa.

8. A process for obtaining the heterophasic polypropylene composition (terHECO) according to any of the preceding claims through a multi-stage polymerization process comprising the steps of:
a) polymerizing propylene, ethylene and 1-butene in a first polymerization reactor, in the presence of a Ziegler-Natta catalyst and obtaining a first reaction fraction;
b) transferring the first reaction fraction to a second polymerization reactor;
c) polymerizing propylene, ethylene and 1-butene in the second polymerization reactor in the presence of the Ziegler-Natta catalyst and the first reaction fraction and obtaining a second reaction fraction;
d) transferring the second reaction fraction to a third polymerization reactor;
e) preparing propylene-ethylene elastomer in the presence of the Ziegler-Natta catalyst and the second reaction fraction, to obtain the heterophasic polypropylene composition (terHECO);
wherein the step a) is optionally preceded by a pre-polymerization step.

9. The process according to claim 8, wherein the Ziegler-Natta catalyst comprises:
- compound(s) of a transition metal of Group 4 to 6 of IUPAC;
- a Group 2 metal compound;
- an internal donor, wherein said internal donor is a non-phthalic compound, preferably is a non-phthalic acid ester;
- a co-catalyst; and
- optionally an external donor.

10. The process according to claim 9, wherein the internal donor is preferably selected from (di)esters of non-phthalic carboxylic (di)acids, 1,3-diethers, derivatives and mixtures thereof.

11. An article, preferably a film, more preferably a blown film, comprising the heterophasic polypropylene composition (terHECO) according to any of the claims 1-7, preferably in an amount of from 80 to 100 wt.-%, more preferably from 90 to 100 wt.- %, based on the total weight of the article.

12. The article according to claim 11, wherein the article is a film, more preferably a blown film, with a thickness of from 5 to 200 µm, preferably from 10 to 150 µm, and most preferably from 20 to 100 µm.

13. The article according to any of the claims 11 or 12, wherein the article is a film, more preferably a blown film, having:
a) a tensile modulus in machine direction (TM/MD), as determined on 50 µm blown film in accordance with ISO 527-3, of from 100 to 900 MPa, preferably from 200 to 800 MPa, and most preferably from 250 to 600 MPa; and/or
b) a tensile modulus in transverse direction (TM/TD), as determined on 50 µm blown film in accordance with ISO 527-3, of from 100 to 900 MPa, preferably from 200 to 800 MPa, and most preferably from 250 to 500 MPa.

14. The article according to any of the claims 11 to 13, wherein the article is a film, more preferably a blown film, having a sealing initiation temperature (SIT), as determined on 50 µm blown film according to the method disclosed in description, of from 90 to 120 °C, preferably from 95 to 115 °C, and most preferably from 100 to 110 °C.

15. The article according to any of the claims 11 to 14, wherein the article is a film, more preferably a blown film, having a dart drop impact (DDI), as determined as determined on 50 µm blown film in accordance with ISO 7765-1:1988/Method A, of from 500 to 1700 g, preferably from 600 to 1500 g, and most preferably from 800 to 1200 g.

## Patentansprüche

1. Eine heterophasische Zusammensetzung von Polypropylen (terHECO), umfassend eine Matrixphase aus einem Terpolymer von Propylen, Ethylen und 1-Buten und eine disperse Phase aus einem Elastomer von Propylen und Ethylen, wobei die heterophasische Zusammensetzung von Polypropylen (terHECO)
- eine Schmelzflussrate MFR₂, bestimmt gemäß ISO 1133 bei 230 °C unter 2,16 kg, von 0,1 bis 10,0 g/10 min aufweist;
- einen Ethylengehalt, bestimmt durch quantitative ¹³C-NMR-Spektroskopie, wie in der Beschreibung näher erläutert, von 5,0 bis 25,0 Gew.-% aufweist;
- eine Schmelztemperatur Tm, bestimmt gemäß ISO 11357/Teil 3/Methode C2, von 125 bis 145 °C aufweist;
- eine in kaltem Xylol lösliche (XCS) Fraktion, bestimmt gemäß ISO 16152 bei 25 °C, von 10 bis 55 Gew.-% aufweist;
- einen Ethylengehalt der in kaltem Xylol löslichen (XCS) Fraktion (C2(XCS)), bestimmt durch quantitative ¹³C-NMR-Spektroskopie, wie in der Beschreibung näher erläutert, von 35 bis 80 Gew.-% aufweist;
- eine intrinsische Viskosität der kaltem Xylol löslichen (XCS) Fraktion (iV(XCS)), bestimmt gemäß ISO 1628-1&3, von 0,5 bis 5,0 dl/g aufweist.

2. Die heterophasische Zusammensetzung von Polypropylen (terHECO) nach Anspruch 1, mit einem Ethylengehalt, bestimmt durch quantitative ¹³C-NMR-Spektroskopie, wie in der Beschreibung näher erläutert, von 10,0 bis 20,0 Gew.-%, vorzugsweise von 12,0 bis 18,0 Gew.-%.

3. Die heterophasische Zusammensetzung von Polypropylen (terHECO) gemäß einem der vorstehenden Ansprüche, mit einem 1-Buten-Gehalt, bestimmt durch quantitative ¹³C-NMR-Spektroskopie, wie in der Beschreibung näher erläutert, von 0,5 bis 20,0 Gew.-%, vorzugsweise von 1,0 bis 15,0 Gew.-% und am bevorzugtesten von 3,0 bis 10,0 Gew.-%.

4. Die heterophasische Zusammensetzung von Polypropylen (terHECO) gemäß einem der vorstehenden Ansprüche, die eine in kaltem Xylol lösliche (XCS) Fraktion, bestimmt gemäß ISO 16152 bei 25 °C, von 15 bis 50 Gew.-%, vorzugsweise von 25 bis 40 Gew.-%, aufweist.

5. Die heterophasische Zusammensetzung von Polypropylen (terHECO) gemäß einem der vorstehenden Ansprüche, die aufweist:
a) einen Ethylengehalt der in kaltem Xylol löslichen (XCS) Fraktion (C2(XCS)), bestimmt durch quantitative ¹³C-NMR-Spektroskopie, wie in der Beschreibung näher erläutert, von 38 bis 70 Gew.-%, vorzugsweise von 40 bis 60 Gew.-%; und/oder
b) eine intrinsische Viskosität der in kaltem Xylol löslichen (XCS) Fraktion (iV(XCS)), bestimmt gemäß ISO 1628-1&3, von 1,0 bis 4,5 dl/g, vorzugsweise von 2,5 bis 4,0 dl/g.

6. Die heterophasische Zusammensetzung von Polypropylen (terHECO) gemäß einem der vorstehenden Ansprüche, mit:
a) eine Charpy-Kerbschlagzähigkeit (NIS), bestimmt gemäß ISO 179 1eA bei +23 °C, von 30 bis 200 kJ/m², vorzugsweise von 40 bis 150 kJ/m², und am bevorzugtesten von 50 bis 100 kJ/m²; und/oder
b) eine Charpy-Kerbschlagzähigkeit (NIS), bestimmt gemäß ISO 179 1eA bei -20 °C, von 1 bis 20 kJ/m², vorzugsweise von 2 bis 15 kJ/m² und am bevorzugtesten von 5 bis 10 kJ/m².

7. Die heterophasische Zusammensetzung von Polypropylen (terHECO) gemäß einem der vorstehenden Ansprüche, mit einem Biegemodul, bestimmt gemäß ISO 178, von 100 bis 1000 MPa, vorzugsweise von 200 bis 800 MPa und am bevorzugtesten von 300 bis 600 MPa.

8. Ein Verfahren zur Herstellung der heterophasischen Zusammensetzung von Polypropylen (terHECO) gemäß einem der vorstehenden Ansprüche durch ein mehrstufiges Polymerisationsverfahren, umfassend die folgenden Schritte:
a) Polymerisieren von Propylen, Ethylen und 1-Buten in einem ersten Polymerisationsreaktor in Gegenwart eines Ziegler-Natta-Katalysators und Gewinnen einer ersten Reaktionsfraktion;
b) Überführen der ersten Reaktionsfraktion in einen zweiten Polymerisationsreaktor;
c) Polymerisieren von Propylen, Ethylen und 1-Buten in dem zweiten Polymerisationsreaktor in Gegenwart des Ziegler-Natta-Katalysators und der ersten Reaktionsfraktion und Gewinnen einer zweiten Reaktionsfraktion;
d) Überführen der zweiten Reaktionsfraktion in einen dritten Polymerisationsreaktor;
e) Herstellen eines Elastomers von Propylen und Ethylen in Gegenwart des Ziegler-Natta-Katalysators und der zweiten Reaktionsfraktion, um die heterophasische Zusammensetzung von Polypropylen (terHECO) zu erhalten;
wobei dem Schritt a) gegebenenfalls ein Vorpolymerisationsschritt vorausgeht.

9. Das Verfahren nach Anspruch 8, wobei der Ziegler-Natta-Katalysator umfasst:
- Verbindung(en) eines Übergangsmetalls der Gruppen 4 bis 6 der IUPAC;
- eine Verbindung eines Metalls der Gruppe 2;
- einen internen Donor, wobei der interne Donor eine Verbindung ist, die nicht Phthalsäure enthält, vorzugsweise ein Säureester, der nicht Phthalsäure enthält;
- einen Cokatalysator; und
- optional einen externen Donor.

10. Das Verfahren nach Anspruch 9, wobei der interne Donor vorzugsweise aus (Di)estern von (Di)carbonsäuren, die nicht Phthalsäure enthalten, 1,3-Diethern, Derivaten und Mischungen davon ausgewählt ist.

11. Ein Gegenstand, vorzugsweise eine Folie, noch bevorzugter eine Blasfolie, umfassend die heterophasische Zusammensetzung von Polypropylen (terHECO) gemäß einem der Ansprüche 1 bis 7, vorzugsweise in einer Menge von 80 bis 100 Gew.-%, noch bevorzugter von 90 bis 100 Gew.-%, bezogen auf das Gesamtgewicht des Gegenstands.

12. Der Gegenstand gemäß Anspruch 11, wobei der Gegenstand eine Folie, vorzugsweise eine Blasfolie, mit einer Dicke von 5 bis 200 µm, vorzugsweise von 10 bis 150 µm und am meisten bevorzugt von 20 bis 100 µm ist.

13. Der Gegenstand gemäß einem der Ansprüche 11 oder 12, wobei der Gegenstand eine Folie, vorzugsweise eine Blasfolie, ist, die aufweist:
a) einen Zugmodul in Maschinenrichtung (TM/MD), bestimmt an einer 50 µm dicken Blasfolie gemäß ISO 527-3, von 100 bis 900 MPa, vorzugsweise von 200 bis 800 MPa und am bevorzugtesten von 250 bis 600 MPa; und/oder
b) einen Zugmodul in Querrichtung (TM/TD), bestimmt an einer 50 µm dicken Blasfolie gemäß ISO 527-3, von 100 bis 900 MPa, vorzugsweise von 200 bis 800 MPa und am bevorzugtesten von 250 bis 500 MPa.

14. Der Gegenstand gemäß einem der Ansprüche 11 bis 13, wobei der Gegenstand eine Folie, vorzugsweise eine Blasfolie, ist, die eine Siegelfilmbeginn-Temperatur (SIT), bestimmt an einer 50 µm dicken Blasfolie gemäß dem in der Beschreibung offenbarten Verfahren, von 90 bis 120 °C aufweist, vorzugsweise von 95 bis 115 °C, und am bevorzugtesten von 100 bis 110 °C aufweist.

15. Gegenstand nach einem der Ansprüche 11 bis 14, wobei das Erzeugnis eine Folie, vorzugsweise eine Blasfolie, ist, die einen Dart-Drop-Impact (DDI) aufweist, bestimmt an einer 50 µm dicken Blasfolie gemäß ISO 7765-1:1988/Methode A, von 500 bis 1700 g, vorzugsweise von 600 bis 1500 g und am bevorzugtesten von 800 bis 1200 g aufweist.

## Revendications

1. Composition de polypropylène hétérophasique (terHECO) comprenant une phase matricielle d'un terpolymère de propylène/éthylène/1-butène et une phase dispersée d'élastomère de propylène-éthylène, dans laquelle la composition de polypropylène hétérophasique (terHECO) présente
- un indice de fluidité à chaud MFR₂, tel que déterminé selon la norme ISO 1133 à 230 °C, sous 2,16 kg, allant de 0,1 à 10,0 g/10 min ;
- une teneur en éthylène, telle que déterminée par analyse spectroscopique quantitative RMN du ¹³C, comme détaillé dans la description, allant de 5,0 à 25,0 % en poids ;
- une température de fusion Tm, telle que déterminée selon la norme ISO 11357/partie 3/procédé C2, allant de 125 à 145 °C ;
- une fraction soluble à froid dans le xylène (XCS), telle que déterminée selon la norme ISO 16152 à 25 °C, allant de 10 à 55 % en poids ;
- une teneur en éthylène de la fraction soluble à froid dans le xylène (XCS) (C2(XCS)), telle que déterminée par analyse spectroscopique quantitative RMN du ¹³C, comme détaillé dans la description, allant de 35 à 80 % en poids ;
- une viscosité intrinsèque de la fraction soluble à froid dans le xylène (XCS) (iV(XCS)), telle que déterminée selon la norme ISO 1628-1&3, allant de 0,5 à 5,0 dl/g.

2. Composition de polypropylène hétérophasique (terHECO) selon la revendication 1, présentant une teneur en éthylène, telle que déterminée par analyse spectroscopique quantitative RMN du ¹³C, comme détaillé dans la description, allant de 10,0 à 20,0 % en poids, de préférence de 12,0 à 18,0 % en poids.

3. Composition de polypropylène hétérophasique (terHECO) selon l'une des revendications précédentes, présentant une teneur en 1-butène, telle que déterminée par analyse spectroscopique quantitative RMN du ¹³C, comme détaillé dans la description, allant de 0,5 à 20,0 % en poids, de préférence de 1,0 à 15,0 % en poids, et le plus préférentiellement de 3,0 à 10,0 % en poids.

4. Composition de polypropylène hétérophasique (terHECO) selon l'une des revendications précédentes, présentant une fraction soluble à froid dans le xylène (XCS), telle que déterminée selon la norme ISO 16152 à 25 °C, allant de 15 à 50 % en poids, de préférence de 25 à 40 % en poids.

5. Composition de polypropylène hétérophasique (terHECO) selon l'une des revendications précédentes, présentant :
a) une teneur en éthylène de la fraction soluble à froid dans le xylène (XCS) (C2(XCS)), telle que déterminée par analyse spectroscopique quantitative RMN du ¹³C, comme détaillé dans la description, allant de 38 à 70 % en poids, de préférence de 40 à 60 % en poids ; et/ou
b) une viscosité intrinsèque de la fraction soluble à froid dans le xylène (XCS) (iV(XCS)), telle que déterminée selon la norme ISO 1628-1&3, allant de 1,0 à 4,5 dl/g, de préférence de 2,5 à 4,0 dl/g.

6. Composition de polypropylène hétérophasique (terHECO) selon l'une des revendications précédentes, présentant :
a) une résistance au choc Charpy d'éprouvettes entaillées (NIS), telle que déterminée selon la norme ISO 179 1eA à +23 °C, allant de 30 à 200 kJ/m², de préférence de 40 à 150 kJ/m² et le plus préférentiellement de 50 à 100 kJ/m² ; et/ou
b) une résistance au choc Charpy d'éprouvettes entaillées (NIS), telle que déterminée selon la norme ISO 179 1eA à -20 °C, allant de 1 à 20 kJ/m², de préférence de 2 à 15 kJ/m² et le plus préférentiellement de 5 à 10 kJ/m².

7. Composition de polypropylène hétérophasique (terHECO) selon l'une des revendications précédentes, présentant un module en flexion, tel que déterminé selon la norme ISO 178, allant de 100 à 1000 MPa, de préférence de 200 à 800 MPa, et le plus préférentiellement de 300 à 600 MPa.

8. Processus d'obtention de la composition de polypropylène hétérophasique (terHECO) selon l'une des revendications précédentes par un processus de polymérisation en plusieurs étapes comprenant les étapes suivantes :
a) la polymérisation du propylène, de l'éthylène et du 1-butène dans un premier réacteur de polymérisation, en présence d'un catalyseur Ziegler-Natta et l'obtention d'une première fraction réactionnelle ;
b) le transfert de la première fraction réactionnelle dans un deuxième réacteur de polymérisation ;
c) la polymérisation du propylène, de l'éthylène et du 1-butène dans le deuxième réacteur de polymérisation en présence du catalyseur Ziegler-Natta et de la première fraction réactionnelle et l'obtention d'une seconde fraction réactionnelle ;
d) le transfert de la seconde fraction réactionnelle dans un troisième réacteur de polymérisation ;
e) la préparation d'un élastomère de propylène-éthylène en présence du catalyseur Ziegler-Natta et de la seconde fraction réactionnelle, pour obtenir la composition de polypropylène hétérophasique (terHECO) ;
dans lequel l'étape a) est optionnellement précédée d'une étape de prépolymérisation.

9. Processus selon la revendication 8, dans lequel le catalyseur Ziegler-Natta comprend :
- un ou des composé(s) d'un métal de transition du groupe 4 à 6 de l'IUPAC ;
- un composé métallique du groupe 2 ;
- un donneur interne, dans lequel ledit donneur interne est un composé non phtalique, de préférence est un ester d'acide non phtalique ;
- un cocatalyseur ; et
- optionnellement, un donneur externe.

10. Processus selon la revendication 9, dans lequel le donneur interne est de préférence sélectionné parmi les (di)esters de (di)acides carboxyliques non phtaliques, les 1,3-diéthers, des dérivés et des mélanges de ceux-ci.

11. Article, de préférence un film, plus préférentiellement un film soufflé, comprenant la composition de polypropylène hétérophasique (terHECO) selon l'une des revendications 1 à 7, de préférence en une quantité allant de 80 à 100 % en poids, plus préférentiellement de 90 à 100 % en poids, par rapport au poids total de l'article.

12. Article selon la revendication 11, dans lequel l'article est un film, plus préférentiellement un film soufflé, d'une épaisseur allant de 5 à 200 µm, de préférence de 10 à 150 µm, et le plus préférentiellement de 20 à 100 µm.

13. Article selon l'une des revendications 11 ou 12, dans lequel l'article est un film, plus préférentiellement un film soufflé, présentant :
a) un module en traction dans le sens machine (TM/MD), tel que déterminé sur un film soufflé de 50 µm selon la norme ISO 527-3, allant de 100 à 900 MPa, de préférence de 200 à 800 MPa, et le plus préférentiellement de 250 à 600 MPa ; et/ou
b) un module en traction dans le sens transversal (TM/TD), tel que déterminé sur un film soufflé de 50 µm selon la norme ISO 527-3, allant de 100 à 900 MPa, de préférence de 200 à 800 MPa, et le plus préférentiellement de 250 à 500 MPa.

14. Article selon l'une des revendications 11 à 13, dans lequel l'article est un film, plus préférentiellement un film soufflé, présentant une température initiale de scellage (SIT), telle que déterminée sur un film soufflé de 50 µm selon le procédé divulgué dans la description, allant de 90 à 120 °C, de préférence de 95 à 115 °C, et le plus préférentiellement de 100 à 110 °C.

15. Article selon l'une des revendications 11 à 14, dans lequel l'article est un film, plus préférentiellement un film soufflé, présentant un impact à masse tombante (DDI), tel que déterminé sur un film soufflé de 50 µm conformément à la norme ISO 7765-1:1988/Procédé A, de 500 à 1700 g, de préférence de 600 à 1500 g, et le plus préférentiellement de 800 à 1200 g.
